# EUROPEAN PATENT SPECIFICATION

(11) **EP 1 393 563 B1**
(45) Date of publication and mention of the grant of the patent: **01.12.2004**
(21) Application number: 02754565.6
(22) Date of filing: 14.05.2002
(51) Int. Cl.: H04N 7/167, H04N 7/16

(54) **SIMULTANEOUS DIGITAL TELEVISION STREAMS WITH CONDITIONAL ACCESS**
GLEICHZEITIGE DIGITALE FERNSEHSTRÖME MIT KONDITIONALEM ZUGRIFF
FLUX DE TELEVISION NUMERIQUE SIMULTANES A ACCES CONDITIONNEL

(30) Priority: 14.05.2001 US 859187
(43) Date of publication of application: 03.03.2004
(73) Proprietor: SCM Microsystems GmbH, 85737 Ismaning (DE)
(72) Inventor: VANTALON, Luc, Sunnyvale, CA 94087 (US); GAUTIER, Gilles, F-13810 Eygalieres (FR); BOURSIER, Arnaud, F-83860 Nans Les Pins (FR)
(74) Representative: Degwert, Hartmut, Dipl.-Phys.
(86) International application number: PCT/EP2002/005302
(87) International publication number: WO 2002/093921

(56) References cited:
- WO-A-98/21852
- GB-A- 2 337 901
- US-A- 5 420 866
- US-A- 5 517 250

## Description

### Field of the Invention

This invention relates to combination, separation, descrambling and scrambling of multiple digital television signals to provide multiple simultaneous programs.

### Background of the Invention

Various methods have been proposed for limiting access to television signals to authorized customers or subscribers who have made the proper arrangements for licensing of, or payment for, the services. A common method is to scramble broadcast television signals and to require use of a security /access mechanism at the receiving end for descrambling the received signal, provided that the customer or subscriber has a valid and current account with the service provider. This security/access mechanism may be a removable module plugged into a set-top box that is connected to the customer's television set and is activated by a special control code when access to the received signal is authorized.

An emerging trend is to provide a television receivers that is capable of simultaneously receiving, processing and displaying two or more different television programs. One reason for simultaneously receiving multiple television programs is to record one program while viewing another, different program at the same time. Another reason is to enable the television set to provide a "picture-within-a-picture" type display, wherein a composite of two or more independent television programs is displayed, often on separate areas of the television screen. An image of lesser interest could be presented in a smaller size occupying, for example, a corner portion of the screen. Alternatively, one or more images could serve as a program guide listing presently available and future television shows and the corresponding channels. Another reason is to provide a home networking system that serves multiple television sets within a home and allows independent selection of programs to be viewed on each set.

Simultaneous processing of two or more separate television programs complicates the task of providing security/access mechanisms to control descrambling and access to the received programs. A logical solution would be to provide a separate security/access mechanism for each received program. However, this would be a complex solution, would require multiple sets of hardware and associated software, and would require (re)coordination of the different security/access mechanisms to aggregate billing information and to avoid unauthorized subscription transfer.

What is needed is a system for simultaneously receiving, processing and displaying multiple programs where the security/access mechanism is removable and may be part of a legacy security system.

### Summary of the Invention

These needs are met by the invention, which provides a unique security/access mechanism, a master stream that is dynamically built with two or more digital streams which include all of a user's selected television programs. A television receiver, constructed in accordance with the present invention, includes two or more signal receiver mechanisms, each of which can receive a separate program simultaneously. This system includes a signal mixer mechanism for combining the two or more received digital streams that carry the user's selected television programs into a single compressed master stream in a way that the master stream can be processed by a unique security/access mechanism. After being descrambled by the security/access mechanism (if access is authorized), the master stream is received by a demixer that regenerates the different elementary digital streams with enough information to allow the multiple programs to be properly processed and displayed. The invention uses- all possible combinations of sources of digital signal streams, including live broadcast, local caching and home network sources.

### Brief Description of the Drawings

Figure 1 illustrates overall operation of a mixer, a security module and a demixer according to an multiple stream embodiment of the invention.
Figure 2 illustrates overall operation of a mixer, a security module and a demixer according to a single stream embodiment of the invention.
Figure 3 illustrates operation of the mixer in Figure 1 in more detail.
Figure 4 illustrates operation of a stream compression module shown in Figure 3.
Figure 5 is a flow chart illustrating initial processing of a packet by a master compression module shown in Figure 4.
Figure 6 illustrates operation of a demixer shown in Figure 1.
Figure 7 illustrates use of a unique identifier (UI) in a packet
Figure 8 illustrates use of the UI segment shown in Figure 7.
Figure 9 illustrates master FIFO timing for four-stream packet interleaving.

### Description of Best Modes of the Invention

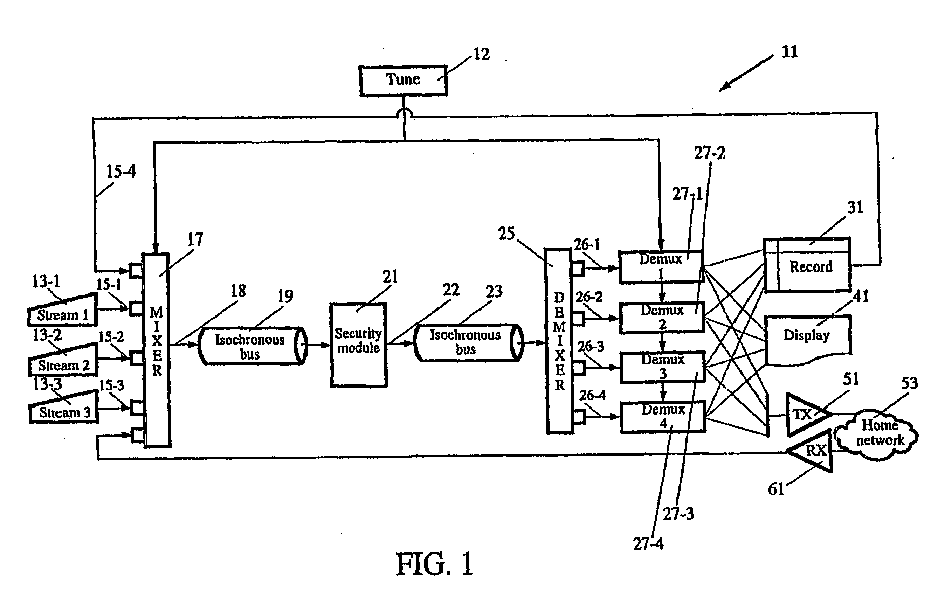

Figure 1 illustrates an implementation of a multiple stream digital television receiver system 11, located at a user site. M digital signal receivers, 13-i (i = 1, 2, ... , I; I=3 in Figure 1), receive rf-modulated signals, 15-i (i = 1, 2, ... , I) and provide digital signal streams of packets for a signal mixer 17. Here, I is a selected positive integer (I = 3 in Figure 1). In a preferred embodiment, the mixer 17 provides signal compression, stream identification and packet conflict management, among other things. The mixer 17 compresses and selectively merges the received individual signal streams 15-m into a master signal stream 18 and passes the master stream on a synchronous bus (or asynchronous bus used in an isochronous mode) 19 to a removable security/access mechanism 21, referred to as a security module. The isochronous (or asynchronous) bus 19 may transport signals formatted according to IEEE 1394, USB, PCI, ASI, RS422, 802.11b, G703 and any other compatible format. The security module 21 descrambles the user's selected programs within the master stream 18, according to the user's subscription rights. If the security module 21 supports a content protection mechanism, the master stream will be re-scrambled before being released to the demixer 25 through another isochronous bus 23.

In one embodiment, the isochronous bus 23 can be identical to the isochronous bus 19.The demixer 25 processes the master stream 22 to regenerate the different elementary digital streams, 15-1, 15-2, 15-3 and 15-4, with enough content and synchronization information to allow the multiple user's selected programs to be properly processed and displayed. Each output, 26-1, 26-2, 26-3 and 26-4, of the demixer 25 is routed to its own demultiplexer, 27-1, 27-2, 27-3 and 27-4, respectively.

The demultiplexer selects, from among the multiple programs within the stream, the program chosen by the user and passes the chosen program to one or more of a recording module 31, a display module 41, and/or a transmission module 51 that is connected to a home network 53. Typical recording units include VCR-type video recorders and various types of computer memory units. Typical display units include television sets and television and computer monitors.

One other mode of operation, referred to as "Personal Video Descrambling," does not require the security module to descramble any program before the program is cached in the recording module 31. This mode corresponds to a video-on-demand service, where a selected movie or other video presentation is downloaded onto the recording module 31 before the time the selection will be viewed, and the user is charged only for what is actually viewed. In this mode, after the user has made a selection, using a "tune" operation, the recording module 31 returns the selected program (as part of a digital stream) to the mixer 17 with a "view-indicium" indicating that this program is to be descrambled, and the security module 21 descrambles the selected program on this second pass. If a program received by the security module 21 does not include a view-indicium, the security module 21 ignores , and does not descramble, the program. The descambled program is received by the display module 41 for immediate viewing, or is received by the transmission module 51 for transmission to a home network system 53.

A home network receiver module 61 optionally receives a digital stream from a spaced apart signal source (home network system 53 or other) and delivers this received stream to the mixer 17 for incorporation into a master stream 18 that is processed by the security module 21.

Another goal of the invention is to use the compression capability of the mixer 17 to reduce the bandwidth required to carry one digital stream in order to pass this stream across a communication system on a relatively low bandwidth, isochronous (or asynchronous) bus.

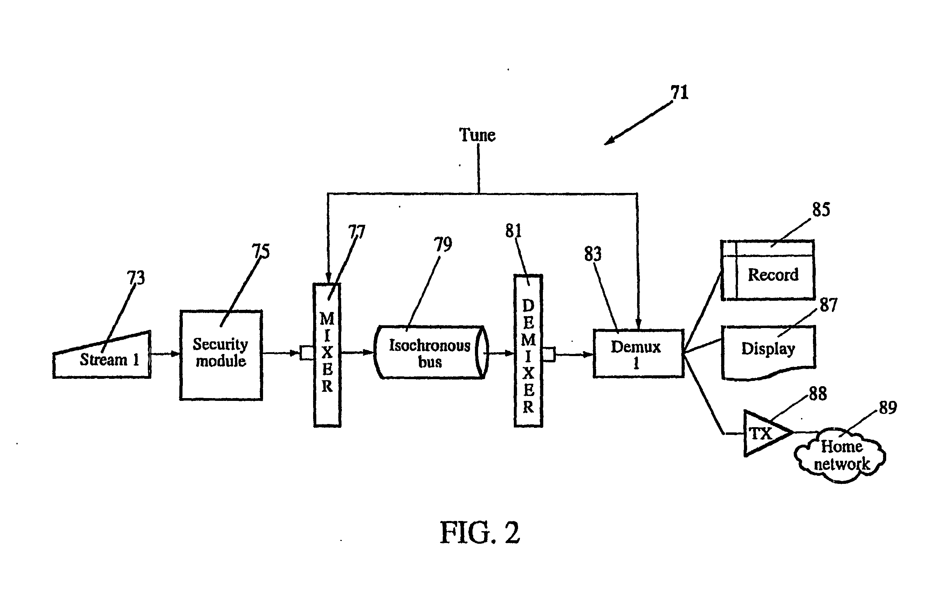

Figure 2 illustrates an implementation of a single stream digital television receiver 71, located at a user site. A digital signal receiver, 73 receives an rf-modulated signal after signal demodulation, provides one stream for a security module 75 that performs selected signal descrambling. The output of the mixer 77 is passed along an isochronous bus (or asynchronous bus acting in an isochronous mode) 79 to a demixer 81 and a demultiplexer 83. Where only a single digital signal stream is received, as in Figure 2, the position for the security module 75 is flexible. The security module 75 may be positioned as shown in Figure 2 or may be positioned between the mixer 77 and the demixer 81.

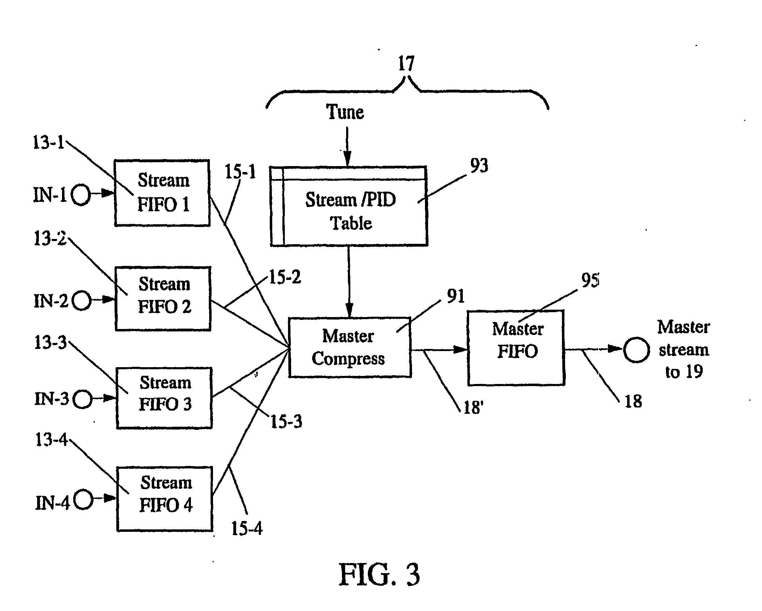

Operation of the mixer 17, shown in Figure 1, is illustrated in more detail in Figure 3. The signal streams 15-i (i = 1, 2, ... , I) are received at a master compression module 91, which removes the unselected packets from each stream in order to reduce the bandwidth required to transport the resulting master stream 18. Preferably, the compression module 91 preserves information on the number of removed packet(s) to permit the regeneration of a signal stream 15-i from which the packet(s) was removed, without requiring use of an expensive time stamping mechanism. The compression module 91 transfers the compressed master stream and information on the removed packet(s) to a master FIFO 95 for bit rate optimization. A PID table 93 allows the compression module 91 to optionally change the packet identifier (PID) values of the program components from the last-added stream, if these values conflict with PID values previously used in the master stream.

The PID table 93 in Figure 3 is a set of registers that includes all relevant information stored in the demultiplexer blocks 27-j in Figure 1. The PID table 93 is updated by a Tune command received from a navigation application each time a program change or stream change is implemented by the system. A compressed master stream 18' is issued from the master compression module 91 and is received by a master FIFO 95. A master stream 18 issues from the FIFO 95 and is received and transported by the isochronous bus 19.

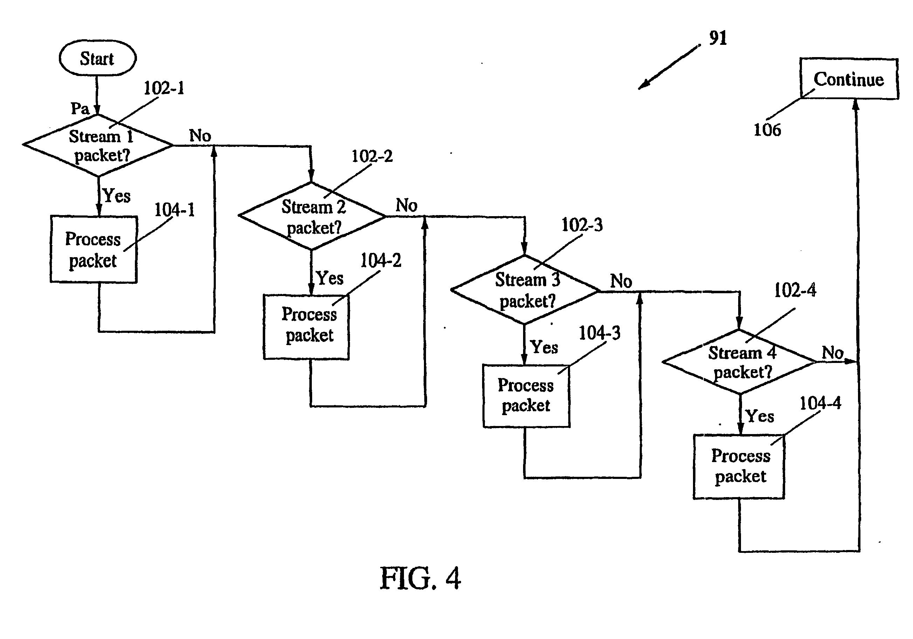

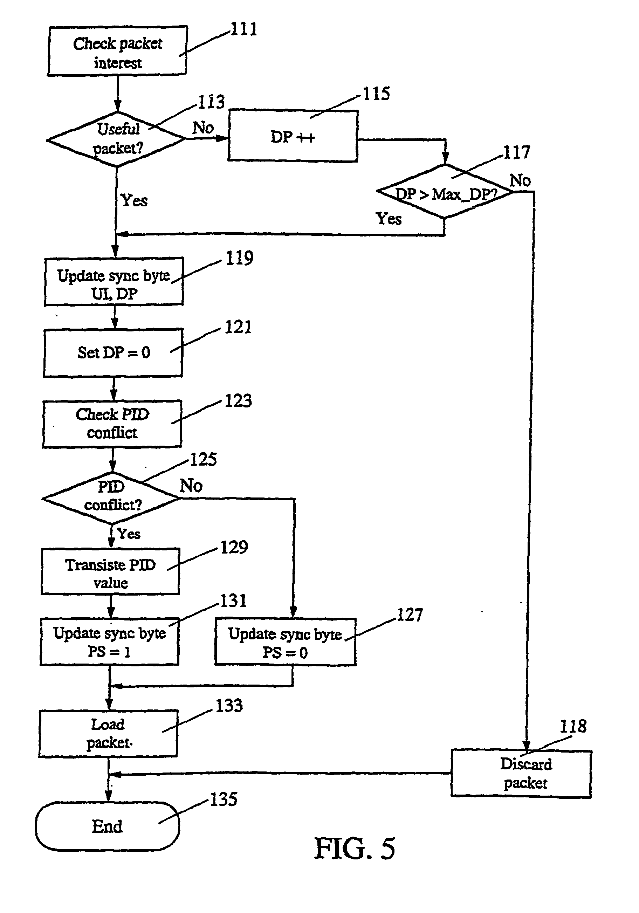

Figure 4 describes the input state machine of the master compression module 91. The selection mechanism checks each stream FIFO in consecutive order to determine if a packet has been stored and is thus available. If a packet is available, the packet is processed as indicated in Figure 5. If no packet is available when a particular stream FIFO is checked, the state machine checks the next stream FIFO in order. This process continues as long as the system receives packets.

Figure 5 illustrates operation of the master compression module 91 in Figure 3 in more detail. As a packet Pa in one of the streams 15-i (i = 1, 2, ... , I) is received, the compression module 91 compares the stream source ID (SS) and the packet PID with corresponding values stored in the PID table 93. If the corresponding values don't match, the packet is discarded and a global counter DP is incremented. If the corresponding values do match, the packet is moved along, and SS and DP values are stored in the sync byte of the packet to indicate that one or more DP packets have been removed in front of the present one. When a packet has been moved along, the master compression module 91 looks in the PID table 93 for a potential PID conflict, which occurs when two different streams use the same PID value to carry programs. If a conflict is detected, the PID values of the last-added program components are shifted by a selected global value, known to the system, and the UI byte for the packet is appropriately modified to indicate that the PID value for this packet has been shifted.

The flow chart in Figure 5 illustrates packet processing, carried out at a stream station in Figure 4, in more detail. In step 111, the system checks the stream number of the packet Pa to confirm that this packet is of interest at this station (i). In step 113, the system determines if the packet Pa is useful (e.g., if the packet is one that is required to process the user's selected multiple programs). If the answer to the query in step 113 is "no", the system moves to step 115 and increments the DP value by 1. The system then determines if the DP value is greater than a selected maximum value DP(max). If the answer to the query in step 117 is "no", the system moves to step 118 and discards the packet. If the answer to the query in step 117 is "yes", the system moves to step 119 and updates the UI and DP values in the sync byte for the packet Pa. If the answer to the query in step 113 is "yes", the system moves to step 119 and updates the UI and DP values in the sync byte for the packet Pa.

The system then moves to step 121 and sets DP = 0. In steps 123 and 125, the system checks whether the packet Pa has a PID conflict with another packet PID. If the answer to the query in step 125 is "no", the system moves to step 127, sets the PS value in the sync byte equal to 0, and moves to step 133. If the answer to the query in step 125 is "yes", the system moves to step 129 and shifts the PID value by the selected shift number. The system then moves to step 131 and sets the PS value in the sync byte equal to 1 and moves to step 133. In step 133, the system loads the packet Pa for further processing. At the end of this process shown in Figure 5, the packet Pa has been discarded (if not useful), or has had its UI, DP and PS values redefined according to whether or not a PID conflict occurs.

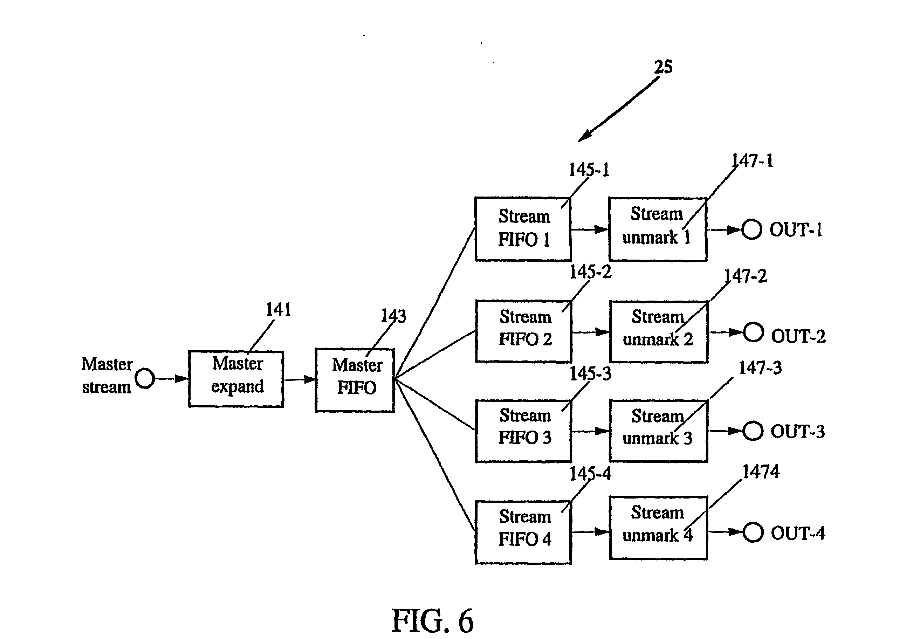

Figure 6 illustrates operation of a demixer 25, shown in Figure 1. The demixer 25 receives the master stream from the isochronous bus 19 at a master expand module 141, which determines the particular stream with which each packet is associated and optionally inserts a null packet for each packet that has been removed by the master compression module 91 of the mixer 17, before sending each stream to its appropriate stream FIFO 145-k (k =1, 2, ... , K), and thence to a corresponding stream unmark module 147-k that (optionally) removes any tag associated with numbering in the master stream.

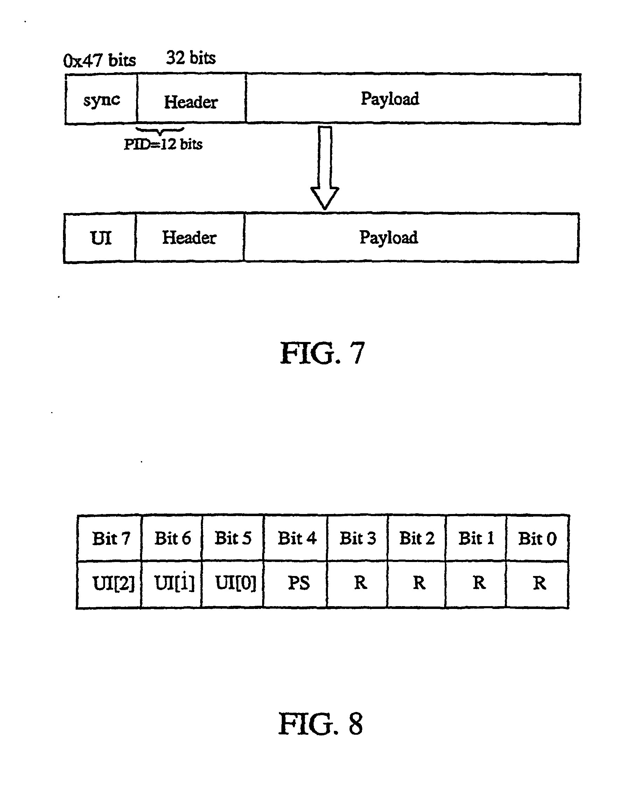

A packet marker module, associated with a mixer (17 in Figure 1), receives an active stream 15-i containing a packet Pa and inserts a unique identifier byte UI into the "sync byte" (0 x 47 bits) of an MPEG packet header, shown in more detail in Figure 7. A three-bit UI byte, UI[i] (i = 0, 1, 2), shown in more detail in Figure 8, allows the mixer, the security module (21) and a demultiplexer (27-i) to distinguish between PID values for packets corresponding to different active streams 15-i. Where a UI byte is modified to avoid a conflict, one of the reserved bits, for example, bit 4, is given a default value, PS = 0, to indicate that the PID has been shifted by a common value defined by the particular application (e.g., by the shift value 1000). One embodiment of the security module 21 can distinguish two packets with the same PID but from different signal streams, using the UI byte, so that in some instances the PID translator need not be activated; in such an instance, the PID translator is transparent.

Packets in different streams can have the same packet identifier (PID). In some instances, where PIDs for two different streams are the same, a selected numerical shift value, such as the number 1000, will be added to one or more of these PIDs to distinguish these from another PID. This added numerical shift is subsequently removed, after the streams are again separated.

One suitable embodiment of the security module 21 in Figure 1 is described in U.S. Serial No. 09/444,495, which permits flexible filtering and flexible descrambling and/or scrambling, using a programmable portion of the packet header. In a preferred embodiment, full identification of a particular packet requires specification of the sync byte (UI) and of the PID.

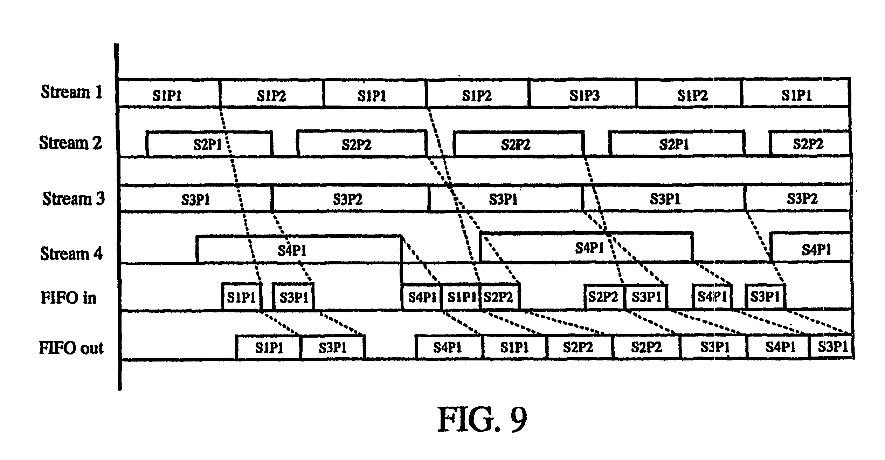

Figure 9 illustrates interleaving of packets from four streams, carried out at a master FIFO, such as 95 shown in Figure 3. Stream 1 includes the ordered packets S1P1(1), S3P2(1), S1P1(2), S1P2(2), S1P3(1), S1P2(3) and S1P1(3). Stream 2 includes the ordered packets S2P1(1), S2P2(1), S2P2(2), S2P1(2), S2P2(3). Stream 3 includes the ordered packets S3P1(1), S3P2(1), S3P1(2), S3P1(3) and S3P2(2). Stream 4 includes the ordered packets S4P1(1), S4P1(2) and S4P1(3). The four streams of packets are received more or less simultaneously in time according to an increasing time variable t. The master compression module 91 determines the packets that are accepted for interleaving as described in Figure 4: S1P1(1), S3P1(1), S4P1(1), S1P1(2), S2P2(1), S2P2(2), S3P1(2), S4P1(2), S3P1(3), etc. A packet must be completely received before the packet can be analyzed, interleaved and added to the FIFO output stream. The order of the interleaved packets in the FIFO output stream is the same as the order of packets accepted for interleaving by the FIFO input module.

Use of an isochronous or asynchronous bus, 19 and/or 23, allows two or more of the signal mixer 17, the security module 21 and the signal demixer 25 to be different physical devices and/or to be spaced apart from each other.

The security module 21 may be a security/access mechanism that is chosen for use with at least one of the signal mixer 17 and the signal demixer 25. Alternatively, one or more packet headers may be configured or reconfigured to permit use of a legacy security module that was not originally constructed for use as part of the system 11 in Figure 1.

## Claims

1. A system for receiving and processing multiple streams of digital signals, the system comprising:
a plurality of digital television signal receivers, numbered i = 1, ... , I, where each receiver provides a scrambled digital signal stream (13-1, 13-2, 13-3) of packets, where I is a selected integer equal to or higher than 2;
a signal mixer (17) that receives and interleaves the I scrambled streams (13-1, 13-2, 13-3) to provide a master stream (18);
a security mechanism (21) that receives the master stream (18), determines and applies signal access rights associated with a signal user for at least one digital television program represented in the master stream, and descrambles a selected portion of the master stream to provide a descrambled signal stream;
a signal demixer (25) that receives and de-interleaves the master stream and regenerates at least one selected program from the descrambled signal stream; and
a bus (19, 23) that performs at least one of (i) transporting the master stream (18) from the mixer (17) to the security mechanism (21) and (ii) transporting the master stream (18) from the security mechanism (21) to the signal demixer (25);
and a compression mechanism (91) that (i) removes at least one selected packet from said scrambled streams, (ii) determines and maintains selected information on the at least one removed packet and (iii) provides the selected information to at least one of said security mechanism (21) and said demixer (25) to facilitate said regeneration of said at least one selected program.

2. The system of claim 1, wherein said at least one selected program is regenerated without use of a time stamp associated with said at least one selected packet.

3. The system of claim 1, wherein at least two of said signal mixer (17), said security mechanism (21) and said signal demixer (25) are spaced apart from each other.

4. The system of any of claims 1 to 3, wherein each of said provided packets has a packet identifier, and further comprising packet discrimination means (93) that assigns an alternative packet identifier to at least one of at least two packets, when the at least two packets have the same packet identifier.

5. A method for receiving and processing multiple streams of digital signals, the method comprising:
receiving, at each of a plurality of signal receivers, numbered i = 1, ... , I and associated with a signal user, a selected scrambled digital television signal stream of packets, where I is a selected integer equal to or higher than 2;
receiving and interleaving the I scrambled streams to provide a master stream (18);
receiving the master stream (18) at a security module (21), determining and applying signal access rights associated with a signal user for at least one digital television program represented in the master stream (18), and descrambling a selected portion of the master stream (18) to provide a descrambled stream;
receiving and de-interleaving the master stream (18) at a signal demixer (25) and regenerating at least one selected program in the descrambled signal stream;
using a bus (19, 23) to perform at least one of (i) transporting the master stream to the security mechanism (21) and (ii) transporting the master stream from the security mechanism (21) to the signal demixer (25); and passing said master stream through a compression mechanism (91) that (i) removes at least one selected packet from said scrambled streams, (ii) determines and maintains selected information on the at least one removed packet and (iii) provides the selected information to at least one of said security mechanism (21) and said demixer (25) to facilitate said regeneration of said at least one selected program.

6. The method of claim 5, further comprising regenerating said at least one selected program without use of a time stamp associated with said at least one selected packet

7. The method of claim 5 or claim 6, further comprising providing at least two of said signal mixer (17), said security mechanism (21) and said signal demixer (25) at locations that are spaced apart from each other.

8. The method of any of claims 5 to 7, further comprising:
providing each of at least two of said packets with a packet identifier; and
passing the at least two packets through a packet discrimination means (93) that assigns an alternative packet identifier to at least one of at least two packets, when the at least two packets have the same packet identifier.

## Patentansprüche

1. System zum Empfang und zur Verarbeitung von Mehrfachströmen digitaler Signale, das folgendes umfaßt:
mehrere digitale Fernsehsignalempfänger, die mit i = 1, ... , I numeriert sind, wobei die Empfänger jeweils einen verwürfelten digitalen Signalstrom (13-1, 13-2, 13-3) von Paketen liefern, wobei I eine ausgewählte ganze Zahl ist, die größer oder gleich 2 ist,
einen Signalmischer (17), der zur Lieferung eines Hauptstroms (18) die I verwürfelten Ströme (13-1, 13-2, 13-3) empfängt und verschachtelt,
einen Sicherheitsmechanismus (21), der den Hauptstrom (18) empfängt, einem Signalnutzer zugeordnete Signalzugriffsrechte für wenigstens ein im Hauptstrom vertretenes digitales Fernsehprogramm feststellt und anwendet, und zur Lieferung eines entwürfelten Signalstroms einen ausgewählten Teil des Hauptstroms entwürfelt,
einen Signalentmischer (25), der den Hauptstrom empfängt und entschachtelt und wenigstens ein ausgewähltes Programm aus dem entwürfelten Signalstrom regeneriert, und
einen Bus (19, 23), der (i) den Transport des Hauptstroms (18) vom Mischer (17) zum Sicherheitsmechanismus (21) und/oder (ii) den Transport des Hauptstroms (18) vom Sicherheitsmechanismus (21) zum Signalentmischer (25) ausführt,
sowie einen Kompressionsmechanismus (91), der (i) aus den verwürfelten Strömen wenigstens ein ausgewähltes Paket entnimmt, (ii) ausgewählte Informationen über das wenigstens eine entnommene Paket feststellt und hält und (iii) die ausgewählten Informationen an den Sicherheitsmechanismus (21) und/oder den Entmischer (25) liefert, um die Regeneration des wenigstens einen ausgewählten Programms zu erleichtern.

2. System nach Anspruch 1, bei dem das wenigstens eine ausgewählte Programm ohne Verwendung eines dem wenigstens einen ausgewählten Paket zugeordneten Zeitstempels regeneriert wird.

3. System nach Anspruch 1, bei dem wenigstens zwei der Elemente Signalmischer (17), Sicherheitsmechanismus (21) und Signalentmischer (25) voneinander beabstandet angeordnet sind.

4. System nach einem der Ansprüche 1 bis 3, bei dem jedes der gelieferten Pakete eine Paketkennung aufweist, und das ferner ein Paketunterscheidungsmittel (93) umfaßt, das dann, wenn wenigstens zwei Pakete die gleiche Paketkennung aufweisen, wenigstens einem der wenigstens zwei Pakete eine Ersatz-Paketkennung zuweist.

5. Verfahren zum Empfang und zur Verarbeitung von Mehrfachströmen digitaler Signale, das folgendes umfaßt:
an jedem von mehreren Signalempfängern, die mit i = 1, ... , I numeriert und einem Signalnutzer zugeordnet sind, wird ein ausgewählter, verwürfelter digitaler Fernsehsignalstrom von Paketen empfangen, wobei I eine ausgewählte ganze Zahl ist, die größer oder gleich 2 ist,
zur Lieferung eines Hauptstroms (18) werden die I verwürfelten Ströme empfangen und verschachtelt,
an einem Sicherheitsmodul (21) wird der Hauptstrom (18) empfangen, einem Signalnutzer zugeordnete Signalzugriffsrechte für wenigstens ein im Hauptstrom (18) vertretenes digitales Fernsehprogramm werden festgestellt und angewendet, und zur Lieferung eines entwürfelten Stroms wird ein ausgewählter Teil des Hauptstroms (18) entwürfelt,
der Hauptstrom (18) wird an einem Signalentmischer (25) empfangen und entschachtelt und es wird wenigstens ein ausgewähltes Programm in dem entwürfelten Signalstrom regeneriert,
ein Bus (19, 23) wird verwendet, der (i) den Transport des Hauptstroms zum Sicherheitsmechanismus (21) und/oder (ii) den Transport des Hauptstroms vom Sicherheitsmechanismus (21) zum Signalentmischer (25) ausführt, und der Hauptstrom wird durch einen Kompressionsmechanismus (91) geleitet, der (i) aus den verwürfelten Strömen wenigstens ein ausgewähltes Paket entnimmt, (ii) ausgewählte Informationen über das wenigstens eine entnommene Paket feststellt und hält und (iii) die ausgewählten Informationen an den Sicherheitsmechanismus (21) und/oder den Entmischer (25) liefert, um die Regeneration des wenigstens einen ausgewählten Programms zu erleichtern.

6. Verfahren nach Anspruch 5, das ferner die Regenerierung des wenigstens einen ausgewählten Programms ohne Verwendung eines dem wenigstens einen ausgewählten Paket zugeordneten Zeitstempels umfaßt.

7. Verfahren nach Anspruch 5 oder Anspruch 6, bei dem ferner wenigstens zwei der Elemente Signalmischer (17), Sicherheitsmechanismus (21) und Signalentmischer (25) an voneinander beabstandeten Stellen vorgesehen sind.

8. Verfahren nach einem der Ansprüche 5 bis 7, das ferner folgendes umfaßt:
wenigstens zwei der Pakete werden jeweils mit einer Paketkennung versehen, und
die wenigstens zwei Pakete werden durch ein Paketunterscheidungsmittel (93) geleitet, das dann, wenn wenigstens zwei Pakete die gleiche Paketkennung aufweisen, wenigstens einem der wenigstens zwei Pakete eine Ersatz-Paketkennung zuweist.

## Revendications

1. Système pour recevoir et traiter des flux multiples de signaux numériques, le système comportant :
plusieurs récepteurs numériques de signaux de télévision, numérotés par i = 1, ..., I, chaque récepteur fournissant un flux brouillé (13-1, 13-2, 13-3) de signaux numériques composé de paquets, I étant un entier sélectionné qui est égal ou supérieur à 2,
un mélangeur (17) de signaux qui reçoit et imbrique les I flux brouillés (13-1, 13-2, 13-3) pour fournir un flux principal (18),
un mécanisme de sécurité (21) qui reçoit le flux principal (18), détermine et applique des autorisations d'accès aux signaux associées à un utilisateur de signaux pour au moins un programme numérique de télévision représenté dans le flux principal, et désembrouille une partie sélectionnée du flux principal pour fournir un flux désembrouillé de signaux,
un démélangeur (25) de signaux qui reçoit et désimbrique le flux principal et régénère au moins un programme sélectionné du flux désembrouillé de signaux, et
un bus (19, 23) qui effectue (i) le transport du flux principal (18) du mélangeur (17) au mécanisme de sécurité (21) et/ou (ii) le transport du flux principal (18) du mécanisme de sécurité (21) au démélangeur (25) de signaux,
et un mécanisme de compression (91) qui (i) prélève sur les flux brouillés au moins un paquet sélectionné, (ii) détermine et maintient des informations sélectionnées au sujet dudit au moins un paquet prélevé et (iii) fournit les informations sélectionnées au mécanisme de sécurité (21) et/ou au démélangeur (25) afin de faciliter la régénération dudit au moins un programme sélectionné.

2. Système selon la revendication 1, dans lequel ledit au moins un programme sélectionné est régénéré sans utiliser de chronotimbre associé audit au moins un paquet sélectionné.

3. Système selon la revendication 1, dans lequel au moins deux éléments parmi le mélangeur (17) de signaux, le mécanisme de sécurité (21) et le démélangeur (25) de signaux sont espacés l'un de l'autre.

4. Système selon l'une des revendications 1 à 3, dans lequel chacun des paquets fournis possède une identification de paquet et qui comprend en outre un moyen (93) de discrimination de paquet qui attribue à au moins un parmi au moins deux paquets une identification de paquet alternative lorsqu'au moins deux paquets ont la même identification de paquet.

5. Procédé pour recevoir et traiter des flux multiples de signaux numériques, le procédé comprenant les étapes suivantes :
un flux sélectionné et brouillé de signaux numériques de télévision, composé de paquets, est reçu dans chacun parmi plusieurs récepteurs de signaux, numérotés par i = 1, ..., I et associés à un utilisateur de signaux, I étant un entier sélectionné qui est égal ou supérieur à 2,
les I flux brouillés sont reçus et imbriqués pour fournir un flux principal (18),
le flux principal (18) est reçu dans un module de sécurité (21), les autorisations d'accès aux signaux associées à un utilisateur de signaux sont déterminées et appliquées pour au moins un programme numérique de télévision représenté dans le flux principal (18), et une partie sélectionnée du flux principal (18) est désembrouillée pour fournir un flux désembrouillé,
le flux principal (18) est reçu et désimbriqué dans un démélangeur (25) de signaux et au moins un programme sélectionné dans le flux désembrouillé de signaux est régénéré,
un bus (19, 23) est utilisé pour effectuer (i) le transport du flux principal vers le mécanisme de sécurité (21) et/ou (ii) le transport du flux principal du mécanisme de sécurité (21) au démélangeur (25) de signaux, et le flux principal est passé dans un mécanisme de compression (91) qui (i) prélève sur les flux brouillés au moins un paquet sélectionné, (ii) détermine et maintient des informations sélectionnées au sujet dudit au moins un paquet prélevé et (iii) fournit les informations sélectionnées au mécanisme de sécurité (21) et/ou au démélangeur (25) pour faciliter la régénération dudit au moins un programme sélectionné.

6. Procédé selon la revendication 5, dans lequel ledit au moins un programme sélectionné est en outre régénéré sans utiliser de chronotimbre associé audit au moins un paquet sélectionné.

7. Procédé selon la revendication 5 ou 6, dans lequel au moins deux éléments parmi le mélangeur (17) de signaux, le mécanisme de sécurité (21) et le démélangeur (25) de signaux sont en outre prévus à des endroits qui sont espacés les uns des autres.

8. Procédé selon l'une des revendications 5 à 7, comprenant en outre les étapes suivantes:
chaque paquet parmi au moins deux des paquets est pourvu d'une identification de paquet, et
lesdits au moins deux paquets sont passés dans un moyen (93) de discrimination de paquet qui attribue à au moins un parmi au moins deux paquets une identification de paquet alternative lorsque lesdits au moins deux paquets ont la même identification de paquet.
